# EUROPÄISCHE PATENTANMELDUNG

(11) **EP 4 152 451 A1**
(43) Veröffentlichungstag der Anmeldung: **22.03.2023**
(21) Anmeldenummer: 22193808.7
(22) Anmeldetag: 05.09.2022
(51) Int. Cl.: H01M 8/04119, B01D 29/03

(54) **WASSERAUFFANGSYSTEM**

(30) Priorität: 20.09.2021 DE 102021124180
(71) Anmelder: FAUN Umwelttechnik GmbH & Co. KG, 27711 Osterholz-Scharmbeck (DE)
(72) Erfinder: Nowicki, Piotr, 55-093 Kielczow (PL)
(74) Vertreter: Regler, Markus Egid

(57) **Zusammenfassung**

Die Erfindung betrifft ein Wasserauffangsystem (1) mit einem Gehäuse (2), einem Einlass (3), der mit einem Ausgang einer Brennstoffzelle fluidleitend verbunden ist, und einem Auslass (4), der mit der Umgebung fluidleitend verbunden ist, einem Verschlusselement (9), durch das der Einlass (3) fluiddicht abdeckbar ist, sowie einem Auffangraum (6) für kondensiertes Prozesswasser.

Durch das Wasserauffangsystem (1) ist sichergestellt, dass kein unerwünschter Rückfluss von dampfförmigem oder flüssigem Wasser in die Brennstoffzelle erfolgt.

## Beschreibung

Die Erfindung betrifft ein Wasserauffangsystem mit einem Gehäuse, einem Einlass, der mit einem Ausgang einer Brennstoffzelle fluidleitend verbunden ist, und einem Auslass, der mit der Umgebung fluidleitend verbunden ist, einem Verschlusselement, durch das der Einlass fluiddicht abdeckbar ist, sowie einen Auffangraum für kondensiertes Prozesswasser.

Im Bereich der Elektromobilität spielt neben rein batterie- oder hybridbetriebenen Fahrzeugen auch der Wasserstoffantrieb eine wichtige Rolle. Dabei wird ein zum Vortrieb des Fahrzeuges eingesetzter Elektromotor durch eine Brennstoffzelle mit elektrischem Strom versorgt. Bei Wasserstoff-Brennstoffzellen wird gasförmiger Wasserstoff mit Sauerstoff zu Wasser oxidiert, wodurch elektrischer Strom gewonnen wird. Das entstehende Prozesswasser wird im Betrieb der Brennstoffzelle in Form von Dampf durch entsprechende Leitungen abgeleitet.

Dabei kann der Wasserdampf an den Wänden der Leitung kondensieren. Das flüssige Wasser kann in die Brennstoffzelle zurückfließen, was deren Betriebseigenschaften negativ beeinflusst. In Zeiträumen, in denen die Brennstoffzelle nicht arbeitet, besteht zudem die Gefahr, dass der bereits in die Leitungen abgegebene Dampf in die Brennstoffzelle zurückfließt, was für deren Betrieb ebenfalls nachteilig ist.

Es ist daher die Aufgabe der vorliegenden Erfindung, eine Vorrichtung zur Verfügung zu stellen, die den Wasserrückfluss in die Brennstoffzelle verhindert. Diese Aufgabe wird gelöst durch ein Wasser Auffangsystem mit den Merkmalen des Anspruchs 1. Weitere vorteilhafte Ausgestaltungen der Erfindung sind Gegenstand der abhängigen Ansprüche 2 bis 15.

Anspruch 1 betrifft ein Wasserauffangsystem mit einem Gehäuse, einem Einlass, der mit einem Ausgang einer Brennstoffzelle fluidleitend verbunden ist, und einem Auslass, der mit der Umgebung fluidleitend verbunden ist, einem Verschlusselement, durch das der Einlass fluiddicht abdeckbar ist, sowie einem Auffangraum für kondensiertes Prozesswasser. Aus dem Ausgang der Brennstoffzelle strömt Prozesswasser in Form von Wasserdampf in die Vorrichtung und wird durch den Auslass wieder abgegeben und unmittelbar oder durch ein Leitungssystem an die Umgebung abgegeben oder weiterer Verwendung zugeführt. Durch des Verschlusselement ist es möglich, den Einlass fluiddicht zu verschließen, so dass weder Wasserdampf noch Kondenswasser zurück in die Brennstoffzelle fließen können. Insbesondere bei Nichtbetrieb der Brennstoffzelle wird der Einlass abgedeckt, da durch die fehlende Nachströmung an Wasserdampf der im System befindliche Dampf dann zurückströmen könnte. Das an den Innenwänden der Vorrichtung oder auch der an dem Auslass angeordneten Leitungen entstehende kondensierte Prozesswasser wird in einem Auffangraum gesammelt, so dass ein Rückfluss in die Brennstoffzelle auch bei deren Betrieb und bei geöffnetem Verschlusselement nicht möglich ist. Der Auffangraum in vorzugsweise in dem Gehäuse ausgebildet.

In einer Ausführung der Erfindung ist das Verschlusselement durch einen Linearaktuator bewegbar. Dies bietet den Vorteil einer einfachen, präzisen und automatisierten Ansteuerung des Verschlusselements. Dabei kann es sich beispielsweise um einen pneumatischen, hydraulischen oder elektrischen Aktuator handeln.

Insbesondere beträgt der Hub des Linearaktuators mindestens 10 Millimeter, bevorzugt mindestens 15 Millimeter. Das Verschlusselement soll den Einlass des Wasserauffangsystems möglichst schnell verschließen, um unerwünschten Rückfluss zu vermeiden. Daher ist der Abstand zwischen Einlass und Verschlusselement im geöffneten Zustand möglichst klein zu wählen. Gleichzeitig soll aber der Fluss des Wasserdampfs in das Wasserauffangsystem möglichst nicht beeinträchtigt werden, so dass ein bestimmter Mindestabstand notwendig ist.

Weiterhin sieht eine Ausgestaltung der Erfindung vor, dass das Verschlusselement als Gummimetallelement ausgebildet ist. Dies bietet eine stabile und robuste Ausgestaltung des Verschlusselements bei vorteilhaften Abdichtungseigenschaften.

In bevorzugter Weise weist das Gummimetallelement ein erstes und ein zweites Metallelement auf, zwischen denen eine Gummischicht angeordnet ist.

Bevorzugt sind das erste und das zweite Metallelement aus einem rostfreien Stahl oder Aluminium ausgebildet, was hinsichtlich Gewicht und Korrosionsfestigkeit vorteilhaft ist.

Die Metallelemente und die Gummischicht sind vorzugsweise ring- oder scheibenförmig ausgebildet und am Kolben des Linearaktuators angeordnet.

Eine weitere Ausführung sieht vor, dass die Gummischicht gegenüber dem ersten Metallelement entlang des Umfangs vorsteht. Bei einer ring- oder scheibenförmigen Ausgestaltung hat die Gummischicht dann einen größeren Durchmesser als das erste Metallelement. Dadurch kann eine effiziente Abdichtung durch das Verschlusselement erzeugt werden.

Erfindungsgemäß ist das zweite Metallelement kongruent zu der Gummischicht oder steht gegenüber dieser entlang des Umfangs vor. Bei einer ring- oder scheibenförmigen Ausgestaltung hat das zweite Metallelement dann den gleichen oder einen größeren Durchmesser als die Gummischicht. Damit wird eine Pressung der Gummischicht über deren komplette Fläche ermöglicht, was ebenfalls die Abdichtungseigenschaften verbessert.

In einer weiteren Ausgestaltung der Erfindung ist der Auffangraum in Einbaulage unterhalb des Einlasses angeordnet. Besonders bevorzugt ist der Auffangraum am tiefsten Punkt des Wasserauffangsystems angeordnet. Damit ist gewährleistet, dass das kondensierte Prozesswasser schwerkraftbedingt an einer Stelle gesammelt wird, von wo aus es nicht ohne weiteres zurück in den Einlass fließen kann.

Damit der Auffangraum nicht überläuft, ist in einer weiteren Ausgestaltung vorgesehen, dass der Auffangraum einen Ablauf für das kondensierte Prozesswasser aufweist. Dieser ist beispielsweise als Lochplatte, als Abfluss oder als Leitung ausgestaltet oder kann auch einen Leitungsanschluss aufweisen. Der Ablauf kann das Prozesswasser sowohl in die Umgebung als auch zu weiteren Verwendungen im Fahrzeug leiten.

Weiterhin vorteilhaft ist der Auslass in Einbaulage oberhalb des Einlasses angeordnet, Damit kann der von der Brennstoffzelle erzeugte und innerhalb des Auffangsystems nach oben steigende Wasserdampf effizient abgeleitet werden.

Besonders vorteilhaft ist es in diesem Zusammenhang, wenn der Auslass in Einbaulage nach oben wegführt.

In einer weiteren Ausgestaltung der Erfindung ist das Verschlusselement bei Nichtbetrieb der Brennstoffzelle in eine Verschlussposition fahrbar, in der das Verschlusselement den Einlass fluiddicht verschließt. Somit wird vermieden, dass bei Nichtbetrieb der Brennstoffzelle das in dem Wasserauffangsystem verbleibende Prozesswasser zurück in die Brennstoffzelle fließt.

Vorteilhafterweise greift in der Verschlussposition das erste Metallelement in die Öffnung des Einlasses ein. Das bedeutet, dass der etwa bei einer ring- oder scheibenförmigen Ausgestaltung des ersten Metallelementes dessen Durchmesser kleiner ist als der Innendurchmesser des Einlasses. Um einen Verschluss herzustellen, sollte aber der Durchmesser des Metallelementes nur geringfügig kleiner sein als der Innendurchmesser des Einlasses.

Weiterhin ist vorgesehen, dass in der Verschlussposition die Gummischicht den Rand der Öffnung des Einlasses überdeckt. Das bedeutet, bei einer ring- oder scheibenförmigen Ausgestaltung der Gummischicht sollte deren Durchmesser größer sein als der Außendurchmesser des Einlasses. Die Gummischicht sollte so groß gewählt sein, dass sie den Einlass, insbesondere den Zwischenraum zwischen erstem Metallelement und Einlass, vollständig abdichtet. Insbesondere bei einer vollflächigen Pressung der Gummischicht durch das zweite Metallelement wird dieses auch in kleine Lücken gedrückt und erzeugt so eine fluiddichte Abdichtung des Einlasses.

Weitere Einzelheiten und Ausgestaltungen der Erfindung finden sich in den Figuren und der zugehörigen nachfolgenden Beschreibung.

Es zeigen:
- Figur 1: ein erfindungsgemäßes Wasserauffangsystem in einer Seitenansicht,
- Figur 2: ein erfindungsgemäßes Wasserauffangsystem in einer Ansicht von unten,
- Figur 3: ein erfindungsgemäßes Wasserauffangsystem in einer Explosionsdarstellung,
- Figur 4: eine Schnittdarstellung, in der das Verschlusselement in einer offenen Position ist,
- Figur 5: eine Schnittdarstellung, in der das Verschlusselement in einer Verschlussposition ist.

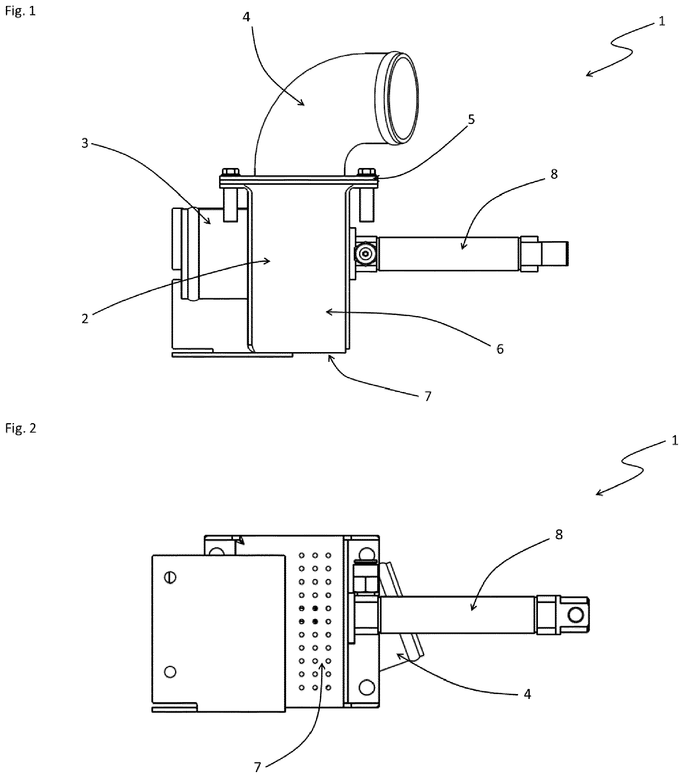

In Figur 1 ist ein Ausführungsbeispiel eines erfindungsgemäßen Wasserauffangsystems 1 in Einbaulage gezeigt. Das Wasserauffangsystem 1 weist ein Gehäuse 2 auf. An dem Gehäuse 2 ist in einer Seitenwand ein Einlass 3 ausgebildet, der mit dem Ausgang einer nicht näher dargestellten Brennstoffzelle fluidleitend verbunden ist. Das bedeutet, dass das in der Brennstoffzelle erzeugte Prozesswasser als Wasserdampf durch den Einlass 3 in das Gehäuse 2 des Wasserauffangsystems 1 gelangen kann. Durch einen Auslass 4 in der Deckplatte 5 kann der Wasserdampf wieder entweichen und wird über nicht näher dargestellte Ableitungen an die Umgebung abgegeben. Die lösbar angeordnete Deckplatte 5 ist über eine Gummidichtung 17 abgedichtet, damit dort kein Dampf entweichen kann und der Dampf gezielt durch den Auslass 4 strömt. Durch die nach oben wegführende Anordnung des Auslasses 4 in der Deckplatte 5 und damit oberhalb des Einlasses 3 wird das Abströmverhalten des Dampfes zusätzlich begünstigt.

In dem Gehäuse 2 ist unterhalb des Einlasses 3 ein Auffangraum 6 für kondensiertes Prozesswasser ausgebildet, das sich durch Kontakt des Dampfes mit den kalten Ableitungen oder Gefäßwänden bildet. Dort kann das kondensierte Wasser schwerkraftgetrieben zusammenfließen. Dadurch dass der Auffangraum 6 tiefer liegt als der Einlass 3, kann das Wasser nicht mehr zurück in die Brennstoffzelle fließen. Den Boden des Auffangraums 6 bildet eine Lochplatte (siehe auch Figur 2 mit Blickrichtung von unten), die als Ablauf 7 wirkt, durch den das kondensierte Wasser wieder aus dem Auffangraum 6 abfließen kann.

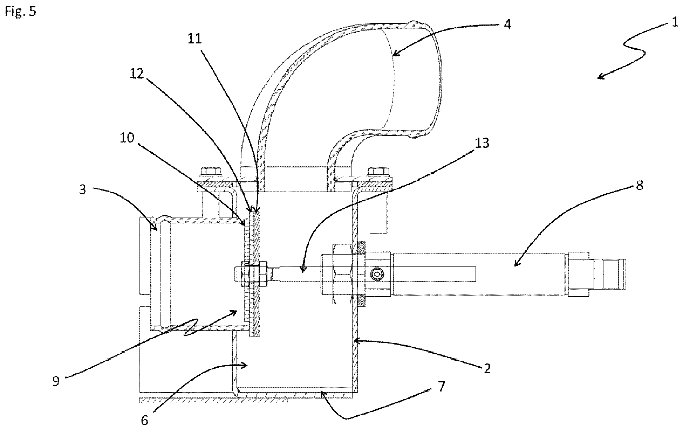

Der Einlass 6 kann durch ein von einem Linearaktuator 8 betriebenes Verschlusselement 9 fluiddicht abgedeckt werden. Dazu wird das Verschlusselement 9 in einer Verschlussposition gefahren (siehe Figur 5), in der es den Einlass 3 vollständig bedeckt.

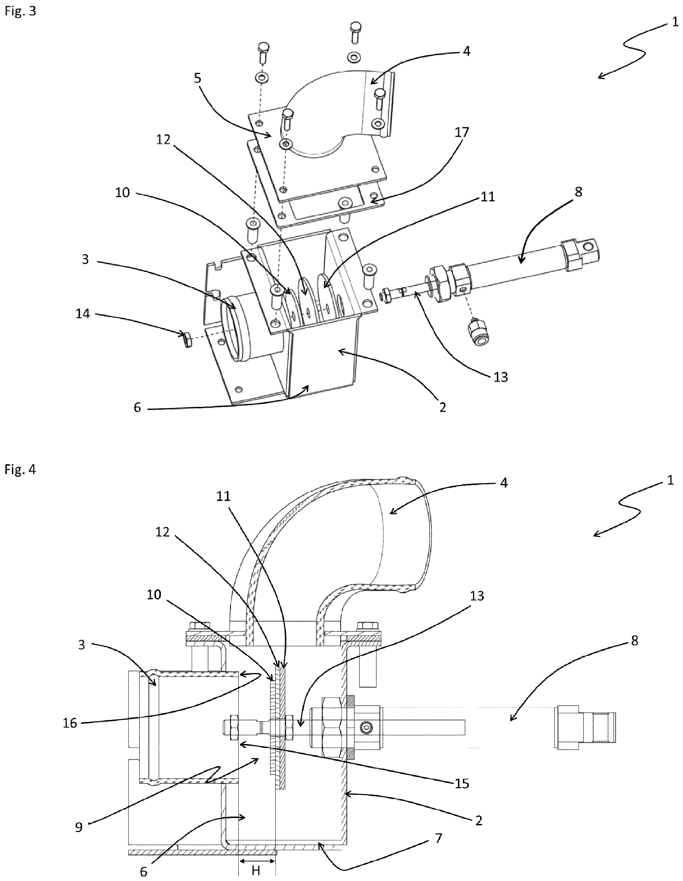

Der Aufbau des Verschlusselementes 9 ist in der Figur 3 sowie den Figuren 4 und 5 gut zu erkennen. Es ist als Gummimetallelement ausgebildet, wobei zwischen einem ersten Metallelement 10 und einem zweiten Metallelement 11 eine Gummischicht 12 angeordnet ist. Die Metallelemente 10, 11 und die Gummischicht 12 sind scheibenförmig ausgebildet und auf dem Kolben 13 des Linearaktuators 8 durch eine Mutter 14 gehalten. Durch den Schichtaufbau wird eine hohe Stabilität des Verschlusselements 9 erreicht und dessen Abdichtverhalten verbessert.

Dabei ist der Durchmesser der Gummischicht 12 größer als der des ersten Metallelementes 10. Das zweite Metallelement 11 hat einen zu der Gummischicht identischen Durchmesser.

Das erste Metallelement 10 ist aus einem rostfreien Stahl gefertigt, während das zweite Metallelement 11 aus Aluminium oder einer Aluminiumlegierung besteht. Dadurch ist das Verschlusselement korrosionsresistent und möglichst leicht ausgeführt.

In den Figuren 4 und 5 wird der Schichtaufbau des Verschlusselements 9 noch einmal deutlich. Figur 4 zeigt das Wasserauffangsystem 1 ist einem Zustand, wenn die Brennstoffzelle in Betrieb ist. Dann wird Wasserstoff mit Sauerstoff zu Wasser oxidiert und der Wasserdampf wird durch das Wasserauffangsystem 1 abgeleitet. Damit dies möglich ist, wird der Einlass 3 nicht durch das Verschlusselement 9 abgedeckt. Das Verschlusselement 9 befindet sich in einer offenen Position, ist also beabstandet von dem Einlass 3.

Kondensiertes Wasser wird in dem Auffangraum 6 des Wasserauffangsystems 1 aufgefangen und kann über den Ablauf 7 wieder aus dem Gehäuse 2 abgeführt werden.

Der Wasserdampf strömt vom Einlass 3 zum Auslass 4 und wird auf diese Weise abgeleitet.

Stellt die Brennstoffzelle ihren Betrieb ein, wird das Verschlusselement 9 mittels des Linearaktuators 8 in eine Verschlussposition gefahren (Figur 5), in der das Verschlusselement 9 den Einlass 3 fluiddicht verschließt. Der Hub H des Linearaktuators 8 beträgt mindestens 15 Millimeter. Der minimale Hub H entspricht hier dem Abstand der Gummischicht 12 von der Öffnung 15 des Einlasses 3.

Der Durchmesser des ersten Metallelements 10 ist kleiner als der Innendurchmesser der Öffnung 15 des hier rohrförmig ausgebildeten Einlasses 3. In der Verschlussposition greift das erste Metallelement 10 daher in den Einlass ein. Der Durchmesser der Gummischicht 12 ist größer als der Außendurchmesser der Öffnung 15. Das bedeutet, dass die Gummischicht 12 gegen den Rand 16 der Öffnung 15 des Einlasses 3 gepresst wird, wobei mit dem zweiten Metallelement 11 vollflächig Druck auf die Gummischicht 12 ausgeübt wird. Dadurch wird das Gummimaterial in die kleine Lücke zwischen erstem Metallelement 10 und Innenwand des Einlasses 3 gedrückt. Damit wird die die Öffnung 15 vollständig abgedichtet und es kann kein Wasser zurück in die Brennstoffzelle fließen,

### Bezugszeichen

- 1: Wasserauffangsystem
- 2: Gehäuse
- 3: Einlass
- 4: Auslass
- 5: Deckplatte
- 6: Auffangraum
- 7: Ablauf
- 8: Linearaktuator
- 9: Verschlusselement
- 10: erstes Metallelement
- 11: zweites Metallelement
- 12: Gummischicht
- 13: Kolben von 8
- 14: Mutter
- 15: Öffnung von 3
- 16: Rand von 15
- 17: Gummidichtung
- H: Hub

## Patentansprüche

1. Wasserauffangsystem (1) mit einem Gehäuse (2), einem Einlass (3), der mit einem Ausgang einer Brennstoffzelle fluidleitend verbunden ist, und einem Auslass (4), der mit der Umgebung fluidleitend verbunden ist, einem Verschlusselement (9), durch das der Einlass (3) fluiddicht abdeckbar ist, sowie einem Auffangraum (6) für kondensiertes Prozesswasser.

2. Wasserauffangsystem (1) nach Anspruch 1 **dadurch gekennzeichnet, dass** das Verschlusselement (9) durch einen Linearaktuator (8) bewegbar ist.

3. Wasserauffangsystem (1) nach Anspruch 2 **dadurch gekennzeichnet, dass** der Hub H des Linearaktuators (8) mindestens 10 Millimeter, bevorzugt mindestens 15 Millimeter beträgt.

4. Wasserauffangsystem (1) nach zumindest einem der vorstehenden Ansprüche **dadurch gekennzeichnet, dass** das Verschlusselement (9) als Gummimetallelement ausgebildet ist.

5. Wasserauffangsystem (1) nach Anspruch 4 **dadurch gekennzeichnet, dass** das Gummimetallelement ein erstes und ein zweites Metallelement (10,11) aufweist, zwischen denen eine Gummischicht (12) angeordnet ist.

6. Wasserauffangsystem (1) nach Anspruch 5 **dadurch gekennzeichnet, dass** die Gummischicht (12) gegenüber dem ersten Metallelement (10) entlang des Umfangs vorsteht.

7. Wasserauffangsystem (1) nach Anspruch 5 oder 6 **dadurch gekennzeichnet, dass** das zweite Metallelement (11) kongruent zu der Gummischicht (12) ist oder gegenüber dieser entlang des Umfangs vorsteht.

8. Wasserauffangsystem (1) nach zumindest einem der vorstehenden Ansprüche **dadurch gekennzeichnet, dass** der Auffangraum (6) in Einbaulage unterhalb des Einlasses (3) angeordnet.

9. Wasserauffangsystem (1) nach zumindest einem der vorstehenden Ansprüche **dadurch gekennzeichnet, dass** der Auffangraum (6) einen Ablauf (7) für das kondensierte Prozesswasser aufweist.

10. Wasserauffangsystem (1) nach zumindest einem der vorstehenden Ansprüche **dadurch gekennzeichnet, dass** der Auslass (4) in Einbaulage oberhalb des Einlasses (3) angeordnet ist.

11. Wasserauffangsystem (1) nach Anspruch 10 **dadurch gekennzeichnet, dass** der Auslass (4) in Einbaulage nach oben wegführt.

12. Wasserauffangsystem (1) nach zumindest einem der vorstehenden Ansprüche **dadurch gekennzeichnet, dass** das Verschlusselement (9) bei Nichtbetrieb der Brennstoffzelle in eine Verschlussposition fahrbar ist, in der das Verschlusselement (9) den Einlass (3) fluiddicht verschließt.

13. Wasserauffangsystem (1) nach Anspruch 12 **dadurch gekennzeichnet, dass** in der Verschlussposition das erste Metallelement (10) in die Öffnung des Einlasses (3) eingreift.

14. Wasserauffangsystem (1) nach Anspruch 12 oder 13 **dadurch gekennzeichnet, dass** in der Verschlussposition die Gummischicht (12) den Rand (16) der Öffnung (15) des Einlasses (3) überdeckt.
